(19) Europäisches Patentamt
European Patent Office
Office européen des brevets

(11) **EP 4 654 524 A1**

(12) **EUROPEAN PATENT APPLICATION**

(43) Date of publication:
**26.11.2025 Bulletin 2025/48**

(21) Application number: **25178135.7**

(22) Date of filing: **22.05.2025**

(51) International Patent Classification (IPC):
**H04L 9/30** (2006.01)

(52) Cooperative Patent Classification (CPC):
**H04L 9/302**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **22.05.2024 IL 31304524
08.01.2025 US 202519013133**

(71) Applicants:
• **Mellanox Technologies, Ltd.
2069200 Yokneam (IL)**
• **Bar-Ilan University
5290002 Ramat Gan (IL)**

(72) Inventors:
• **MENTOVICH, Elad
2069200 Yokneam (IL)**
• **ZAHAVI, Eitan
2069200 Yokneam (IL)**
• **HASSON RUSO, Ran
2069200 Yokneam (IL)**
• **COHEN, Eliahu
5290002 Ramat Gan (IL)**
• **CARMI, Avishy
5290002 Ramat Gan (IL)**

(74) Representative: **Mathys & Squire
The Shard
32 London Bridge Street
London SE1 9SG (GB)**

(54) **QUANDLE-BASED ENCRYPTION**

(57) Systems and methods are described for secure communication to facilitate encrypted transmission of data between a transmitting device (encoder) and a receiving device (decoder), leveraging quandle algebra. An example system includes an encoder, a decoder, and a communication channel. The encoder may generate a ciphertext ($c$) based on a message ($x$), an encoding variable ($y$), and a public encryption key ($e$), wherein, $c = x \triangleright y$. The cipher text ($c$) is then transmitted, via the communication channel, to the decoder. The decoder may receive the ciphertext ($c$) via the communication channel and generate a deciphered form ($x'$) of the message ($x$) based on the ciphertext ($c$), the encoding variable ($y$), and a private encryption key ($f$), wherein, $x' = c \triangleleft y$, and $\triangleright$ and $\triangleleft$ are binary operations that satisfy axioms of a quandle and/or a rack.

_300_

```
RECEIVE, USING AN ENCODER, A MESSAGE (x), AN ENCODING VARIABLE (y), AND A
PUBLIC ENCRYPTION KEY (e)
302
```

```
GENERATE, USING THE ENCODER, A CIPHERTEXT (c) BASED ON THE MESSAGE (x), THE
ENCODING VARIABLE (y), AND THE PUBLIC ENCRYPTION KEY (e), WHEREIN c = x ▷ y
304
```

```
TRANSMIT, USING THE ENCODER, THE CIPHERTEXT (c) ON A COMMUNICATION CHANNEL
306
```

**FIG. 3**

EP 4 654 524 A1

**Description**

CROSS-REFERENCE TO RELATED APPLICATION

The present application claims the benefit of priority under 35 U.S.C. § 119(a) to Israeli Patent Application No. 313,045, filed on May 22, 2024, in Israel. The contents of the Israeli application are hereby incorporated by reference in their entirety for all purposes.

TECHNOLOGICAL FIELD

Example embodiments of the present invention relate to a secure encryption technique.

BACKGROUND

The foundation of modern cryptographic security relies heavily on public key protocols, such as RSA (Rivest-Shamir-Adleman), DH (Diffie-Hellman), and ECDH (Elliptic Curve Diffie-Hellman). These protocols are predicated on the computational difficulty of solving certain mathematical problems: factorization for RSA, the discrete logarithm problem for DH, and the elliptic-curve discrete logarithm problem for ECDH. However, the advent of large-scale quantum computing poses a significant threat to these cryptographic foundations. Quantum algorithms, notably Shor's algorithm, have demonstrated the potential to efficiently solve these underlying mathematical challenges, rendering these encryption methods vulnerable to quantum attacks.

Applicant has identified a number of deficiencies and problems associated with conventional encryption techniques. Many of these identified problems have been mitigated by developing solutions that are included in embodiments of the present disclosure, many examples of which are described in detail herein.

BRIEF SUMMARY

The invention is defined by the claims. In order to illustrate the invention, aspects and embodiments which may or may not fall within the scope of the claims are described herein.

Systems and methods are therefore provided for a secure encryption technique.

In one aspect, a system for implementing secure communication is presented. The system comprising: an encoder, wherein the encoder is configured to: receive a message ($x$), an encoding variable ($y$), and a public encryption key ($e$); generate a ciphertext ($c$) based on the message ($x$), the encoding variable ($y$), and the public encryption key ($e$), wherein $c = x \triangleright y$; and transmit the ciphertext ($c$) on the communication channel; a communication channel operatively coupled to the encoder; and a decoder operatively coupled to the communication channel, wherein the decoder is configured to: receive the ciphertext ($c$), the encoding variable ($y$), and a private encryption key ($f$); and generate a deciphered form ($x'$) of the message ($x$) based on the ciphertext ($c$), the encoding variable ($y$), and the private encryption key ($f$), wherein $x' = c \triangleleft y$, and wherein $\triangleright$ and $\triangleleft$ are binary operations that satisfy axioms of a quandle.

**In** some embodiments, $x$ and $y$ are rational numbers, and wherein $y$ is not equal to 1.

**In** some embodiments, $x$ is a non-integer.

**In** some embodiments, wherein $0 \leq x \leq n - 1$, wherein $n$ is a composite number of the form, $n = p \cdot q$, and wherein $p$ and $q$ are prime numbers.

$$x \triangleright y = y \left( \frac{x}{y} \right)^{e}$$

**In** some embodiments, , wherein $1 < e < \phi(n)$, wherein $\phi(n)$ is Euler's totient function, and wherein $\phi(n) = \phi(p \cdot q) = (p - 1) \cdot (q - 1)$.

**In** some embodiments, $1 < e < \lambda(n)$, wherein $\lambda(n)$ is Carmichael's totient function, and wherein $\lambda(n) = \lambda(p \cdot q) = lcm (p - 1, q - 1)$, wherein lcm is least common multiple.

**In** some embodiments, e is coprime to $\phi(n)$.

$$c \triangleleft y = y \left( \frac{c}{y} \right)^{f}$$

**In** some embodiments, , and wherein $e \cdot f = 1 \ mod \ \phi(n)$.

**In** some embodiments, the encoder is further configured to: receive a second encoding variable ($z$); and generate the ciphertext ($c$) based on the message ($x$), the encoding variable ($y$), the second encoding variable ($z$), and the public

$$x \triangleright y = y \left(\frac{x}{y}\right)^{e}$$

encryption key ($e$), wherein $c = x \triangleright y \triangleright z$, wherein , and $c = (x \triangleright y) \triangleright z = z \left(\frac{y\left(\frac{x}{y}\right)^{e}}{z}\right)^{e}$ .

**In** some embodiments, the decoder is further configured to: receive the ciphertext ($c$), the encoding variable ($y$), and the second encoding variable ($z$); and generate the deciphered form ($x'$) of the message ($x$) based on the ciphertext ($c$), the encoding variable ($y$), the second encoding variable ($z$), and the private encryption key ($f$), wherein $x' = c \triangleleft y \triangleleft z$,

wherein $c \triangleleft z = z\left(\frac{c}{z}\right)^{f}$ , and $x' = (c \triangleleft z) \triangleleft y = y\left(\frac{z\left(\frac{c}{z}\right)^{f}}{y}\right)^{f}$ .

**In** some embodiments, $z$ is a rational number.

**In** some embodiments, the encoder is further configured to: generate the ciphertext ($c$) based on the message ($x$), the encoding variable ($y$), the second encoding variable ($z$), a first public encryption key ($e1$), and a second public

encryption key ($e2$), wherein $x \triangleright y = y\left(\frac{x}{y}\right)^{e1}$ , and $c = (x \triangleright y) \triangleright z = z\left(\frac{y\left(\frac{x}{y}\right)^{e1}}{z}\right)^{e2}$ .

**In** some embodiments, decoder is further configured to: generate the deciphered form ($x'$) of the message ($x$) based on the ciphertext ($c$), the encoding variable ($y$), the second encoding variable ($z$), and a first private encryption key

($f1$), and a second private encryption key ($f2$), wherein $c \triangleleft z = z\left(\frac{c}{z}\right)^{f1}$ , and

$x' = (c \triangleleft z) \triangleleft y = y\left(\frac{z\left(\frac{c}{z}\right)^{f1}}{y}\right)^{f2}$ , wherein $e1 \cdot f1 = 1 \; mod \; \phi(n)$, and $e2 \cdot f2 = 1 \; mod \; \phi(n)$.

**In** another aspect, a method for encoding a message is presented. The method comprising: receiving, using an encoder, a message ($x$), an encoding variable ($y$), and a public encryption key ($e$); generating, using the encoder, a ciphertext ($c$) based on the message ($x$), the encoding variable ($y$), and the public encryption key ($e$), wherein $c = x \triangleright y$; and transmitting, using the encoder, the ciphertext ($c$) to a communication channel, wherein a decoder is configured to generate a deciphered form ($x'$) of the message ($x$) based on the ciphertext ($c$), the encoding variable ($y$), and a private encryption key ($f$), wherein $x' = c \triangleleft y$, and wherein $\triangleright$ and $\triangleleft$ are binary operations that satisfy axioms of a quandle.

In yet another aspect, a method for decoding a message is presented. The method comprising: receiving, using a decoder, a ciphertext ($c$), an encoding variable ($y$), and a private encryption key ($f$); and generating, via the decoder, a deciphered form ($x'$) of a message ($x$) based on the ciphertext ($c$), the encoding variable ($y$), and the private encryption key ($f$), wherein $x' = c \triangleleft y$, wherein the ciphertext ($c$) is generated based on the message ($x$), the encoding variable ($y$), and a public encryption key ($e$), wherein $c = x \triangleright y$, and wherein $\triangleright$ and $\triangleleft$ are binary operations that satisfy axioms of a quandle.

Systems and methods are described for secure communication to facilitate encrypted transmission of data between a transmitting device (encoder) and a receiving device (decoder), leveraging quandle algebra. An example system includes an encoder, a decoder, and a communication channel. The encoder may generate a ciphertext ($c$) based on a message ($x$), an encoding variable ($y$), and a public encryption key ($e$), wherein, $c = x \triangleright y$. The cipher text ($c$) is then transmitted, via the communication channel, to the decoder. The decoder may receive the ciphertext ($c$) via the communication channel and generate a deciphered form ($x'$) of the message ($x$) based on the ciphertext ($c$), the encoding variable ($y$), and a private encryption key ($f$), wherein, $x' = c \triangleleft y$, and $\triangleright$ and $\triangleleft$ are binary operations that satisfy axioms of a quandle and/or a rack.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the disclosure in any way. It will be appreciated that the scope of the present disclosure encompasses many potential embodiments in addition to those here summarized, some of which will be further described below.

Any feature of one aspect or embodiment may be applied to other aspects or embodiments, in any appropriate combination. In particular, any feature of a method aspect or embodiment may be applied to an apparatus aspect or embodiment, and vice versa.

BRIEF DESCRIPTION OF THE DRAWINGS

Having described certain example embodiments of the present disclosure in general terms above, reference will now be made to the accompanying drawings. The components illustrated in the figures may or may not be present in certain embodiments described herein. Some embodiments may include fewer (or more) components than those shown in the figures.

FIG. 1 illustrates an example system environment for secure communication, in accordance with an embodiment of the present invention;

FIG. 2 illustrates a schematic block diagram of example device circuitry, in accordance with an embodiment of the present invention;

FIG. 3 illustrates an example method for encrypting a message, in accordance with an embodiment of the invention; and

FIG. 4 illustrates an example method for decrypting an encrypted message, in accordance with an embodiment of the invention.

DETAILED DESCRIPTION

Overview

Knot theory, a branch of topology, focuses on the study of knots and their properties, specifically how knots can be distinguished, categorized, and transformed into one another through continuous deformations without cutting or joining ends. This theoretical framework may be used to provide a concrete mathematical basis for developing cryptographic methods that are inherently resistant to known quantum computing threats. The application of knot theory to cryptography leverages the concept that knots and their transformations can represent data, encryption processes, and cryptographic keys. The invariants in knot theory (such as the Jones polynomial), which are properties that remain unchanged under knot deformation, offer a way to encode and secure information. These invariants can serve as the basis for cryptographic algorithms, where the complexity and difficulty of analyzing knot transformations provide security against unauthorized decryption. A tightly connected concept is that of a braid, which consists of a set of strands that may intertwine with each other vertically but do not intersect or overlap when viewed from above. Any knot can be represented as a closed braid, where the closure involves connecting the corresponding upper and lower ends of a braid without introducing new crossings. This operation transforms an open braid into a closed loop, or knot, preserving the topological features encoded in the braid structure.

The principle that two knots are equivalent if one can be transformed into the other through continuous deformation without cutting or stitching supports the security model of this cryptographic approach and can aid in traversing a noisy communication channel without losing the encoded information. In this context, the process of encryption can be conceptualized as the "knotting" of data, where the data is entangled in a complex knot structure. Decryption, conversely, involves "unknotting" the data, a process that requires knowledge of specific transformations, analogous to possessing the cryptographic key. The challenge of determining whether two knots are equivalent, particularly as knots increase in complexity, illustrates the difficulty of breaking the cryptographic scheme without the correct key. This highly complex task provides a significant barrier to both classical and quantum computational attacks.

The Reidemeister moves form the basis for determining when two knot diagrams represent the same knot, or in other words, when two knots are equivalent. The Type I move (twist and untwist) adds or removes a twist in the knot diagram. It involves creating or eliminating a single loop, effectively changing the local twisting of the strand. Despite its simplicity, the Type I move is powerful in demonstrating how a single twist does not change the essential properties of a knot. The Type II move (poke) involves two strands of the knot passing twice over or under each other. It can either introduce or remove a pair of crossings such that the strands remain unbroken and the overall topology of the knot is preserved. This move is particularly useful in illustrating how the interaction between different parts of the knot can be altered without affecting its fundamental characteristics. The Type III move (slide) involves sliding one strand over a crossing of two other strands. The Type III move does not change the number of crossings but alters the position of the strands around the crossings. The Type III move demonstrates the flexibility of knots in three-dimensional space, showing that the global structure of a knot can be preserved even as parts of it are rearranged. In the context of cryptography, the idea of knot equivalence through Reidemeister moves offers a metaphor for the encryption and decryption process. Just as a knot can be transformed through a series of moves without altering its essential characteristics, data can be encrypted into a complex form and later decrypted back to its original state, provided the correct sequence of transformations (analogous to the cryptographic key) is known.

Quandles are sets with binary operations satisfying axioms analogous to the Reidemeister moves used to manipulate knot diagrams. Embodiments of the invention contemplate an encryption framework employing the algebraic structure of quandles or racks to ensure secure, reversible encryption processes that allow for complex data manipulations while maintaining the integrity of the encrypted message. The axioms of quandles and racks facilitate the framework for encryption that mirrors operations on a message (plaintext) in the encrypted domain. Specifically, idempotency (quandle-specific) ensures that the encryption of a message using the same message as the encoding variable results in the message itself, a property that can be leveraged for consistency checks and to maintain structural patterns in encrypted data; invertibility allows for the reversible encryption process, ensuring that encrypted data (ciphertext) can be decrypted back to its original form (message) without loss of information, which is fundamental to any encryption scheme; self-distributivity enables complex manipulations of encrypted data that parallel operations on a message, allowing for certain computations to be performed directly on ciphertexts without revealing their contents. Self-distributivity allows for operations such as partially homomorphic encryption, where it is desirable to perform algebraic operations on encrypted data.

By exploiting quandle and rack axioms, the systems, methods, and computer program products described herein facilitate operations on ciphertexts similar to those performed on messages, without compromising confidentiality. Unlike conventional cryptographic algorithms that rely on associative operations (e.g., group operations), the non-associative nature of quandle operations adds a level of complexity to the cryptographic process. This way, the novel cryptographic framework proposed herein increases the level of security provided against conventional and sophisticated attacks, enabling secure data processing and transmission in digital environments. **In** the examples described herein, $x \triangleright y$ and $c \triangleleft y$ are binary operations. Indeed, the two operations may be implemented in a number of ways, as long as these implementations satisfy the axioms of quandle and/or rack algebra. **In** one example embodiment, $x \triangleright y = y \left( \frac{x}{y} \right)^e$ and

$$c \triangleleft y = y \left( \frac{c}{y} \right)^f$$

, where $x$ may refer to the message to be transmitted, $y$ may be an encoding variable (public or private, depending on the application), $e$ may refer to public encryption key, $c$ may refer to the ciphertext, and $f$ may refer to the private encryption key. Unlike many other cryptographic frameworks, $x$, $y$, and $c$ are rational numbers, rather than just integers. **In** the proposed encryption framework, the selection of variables, such as $e$ and $f$, may draw parallels to the established methodologies employed in the Rivest-Shamir-Adleman (RSA) algorithm, particularly in the choice and mathematical properties of specific parameters. Specifically, e may be chosen such that $1 < e < \phi(n)$ and e is coprime to $\phi(n)$, meaning that e and $\phi(n)$ share no common divisors other than 1. This ensures that e has a multiplicative inverse modulo $\phi(n)$. $f$ may be calculated as the multiplicative inverse of e modulo $\phi(n)$. This means $f$ is the number that satisfies the equation $e \cdot f = 1 \ mod \ \phi(n)$. **In** other words, $f$ is chosen such that the product of $f$ and $e$, divided by $\phi(n)$, leaves a remainder of 1. Here, $n$ is the product of two (often large) prime numbers $p$ and $q$, and $\phi(n)$ is Euler's totient function defined as $\phi(n) = \phi(p \cdot q) = (p - 1) \cdot (q - 1)$. Similar to the RSA algorithm, the Carmichael's totient function may be used instead of Euler's totient function for same or similar purposes.

Furthermore, $x \triangleright y$ and $c \triangleleft y$ may be complementary (in accordance with the above invertibility property), ensuring a symmetrical relationship that supports their cryptographic utility. Specifically, while $x \triangleright y$ is used to encrypt the message ($x$), i.e., to generate the ciphertext ($c$), while $c \triangleleft y$ is used in decryption to retrieve the message ($x$) from the ciphertext ($c$). In conventional cryptographic algorithms, such as RSA, the message ($x$), is an integer. However, the proposed relationship between $x \triangleright y$ and $c \triangleleft y$ allows $x$ and $y$ to also be non-integer, or rational number, which increases the complexity of the encryption. Compared to RSA, the proposed relationship not only allows the message ($x$), to be a rational number, but also includes an encoding variable ($y$), which is non-existent in RSA and can also be any integer or rational number. This further increases the complexity of the encryption, thus strengthening security by making unauthorized decryption significantly more difficult. Indeed, when $x$ is an integer and $y = 1$, the resulting relationship aligns with the RSA algorithm, representing a specific instance of the proposed cryptographic framework. What is more, the complexity of the encryption can be further strengthened by introducing additional encoding variables, such as a second encoding variable ($z$) (or many such variables as described herein), to the existing relationship, $x \triangleright y$. Specifically, while $x \triangleright y \triangleright z$ is used to encrypt the message ($x$) to generate the ciphertext ($c$), $c \triangleleft z \triangleleft y$ may be used in decryption to retrieve the previously encrypted message ($x$). Here, the second encoding variable ($z$) is first decoded, followed by the encoding variable ($y$), to then retrieve the message ($x$). Similar to $x$ and $y$, $z$ can also be an integer or a rational number, further increasing the complexity of the encryption. In addition to introducing encoding variables, the complexity of the encryption can be further strengthened by using multiple public key - private key pairs ($e$-$f$ pairs) for each encoding variable introduced. As such, at a minimum, the complexity of the proposed encryption framework aligns with RSA, potentially extending it.

Embodiments of the present disclosure will now be described more fully hereinafter with reference to the accompanying drawings, in which some, but not all, embodiments of the present disclosure are shown. Indeed, the present disclosure may be embodied in many different forms and should not be construed as limited to the embodiments set forth herein; rather, these embodiments are provided so that this disclosure will satisfy applicable legal requirements. Thus, it should be understood that each block of the block diagrams and flowchart illustrations may be implemented in the form of a computer program product; an entirely hardware embodiment; an entirely firmware embodiment; a combination of hardware, computer program products, and/or firmware; and/or apparatuses, systems, computing devices, computing entities, and/or the like carrying out instructions, operations, steps, and similar words used interchangeably (e.g., the executable instructions, instructions for execution, program code, and/or the like) on a computer-readable storage medium for execution. For example, retrieval, loading, and execution of code may be performed sequentially such that one instruction is retrieved, loaded, and executed at a time. In some exemplary embodiments, retrieval, loading, and/or execution may be performed in parallel such that multiple instructions are retrieved, loaded, and/or executed together. Thus, such embodiments may produce specifically-configured machines performing the steps or operations specified in the block diagrams and flowchart illustrations. Accordingly, the block diagrams and flowchart illustrations support various combinations of embodiments for performing the specified instructions, operations, or steps.

Where possible, any terms expressed in the singular form herein are meant to also include the plural form and vice versa, unless explicitly stated otherwise. Also, as used herein, the term "a" and/or "an" shall mean "one or more," even though the phrase "one or more" is also used herein. Furthermore, when it is said herein that something is "based on" something else, it may be based on one or more other things as well. In other words, unless expressly indicated otherwise, as used herein "based on" means "based at least in part on" or "based at least partially on." Like numbers refer to like elements throughout.

As used herein, "operatively coupled" may mean that the components are electronically or optically coupled and/or are in electrical or optical communication with one another. Furthermore, "operatively coupled" may mean that the components may be formed integrally with each other or may be formed separately and coupled together. Furthermore, "operatively coupled" may mean that the components may be directly connected to each other or may be connected to each other with one or more components (e.g., connectors) located between the components that are operatively coupled together. Furthermore, "operatively coupled" may mean that the components are detachable from each other or that they are permanently coupled together.

As used herein, "determining" may encompass a variety of actions. For example, "determining" may include calculating, computing, processing, deriving, investigating, ascertaining, and/or the like. Furthermore, "determining" may also include receiving (e.g., receiving information), accessing (e.g., accessing data in a memory), and/or the like. Also, "determining" may include resolving, selecting, choosing, calculating, establishing, and/or the like. Determining may also include ascertaining that a parameter matches a predetermined criterion, including that a threshold has been met, passed, exceeded, satisfied, etc.

It should be understood that the word "exemplary" is used herein to mean "serving as an example, instance, or illustration." Any implementation described herein as "exemplary" is not necessarily to be construed as advantageous over other implementations.

Furthermore, as would be evident to one of ordinary skill in the art in light of the present disclosure, the terms "substantially" and "approximately" indicate that the referenced element or associated description is accurate to within applicable engineering tolerances.

Example System Environment

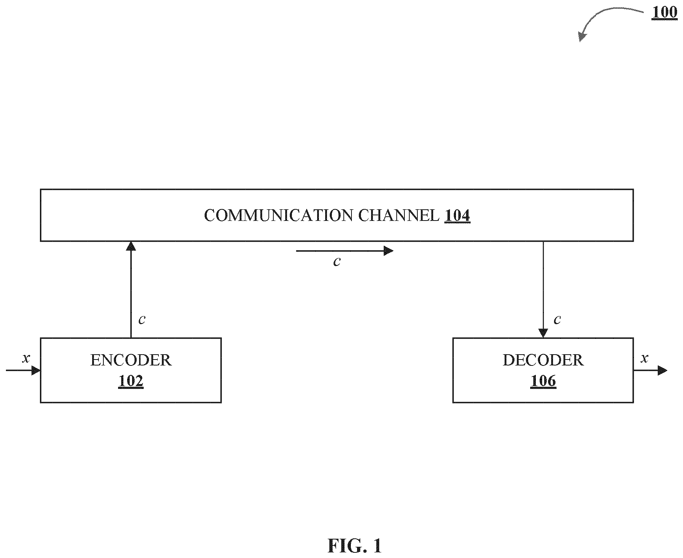

FIG. 1 illustrates an example system environment for secure communication 100, in accordance with an embodiment of the present invention. As shown in FIG. 1, the system environment 100 may include an encoder 102, a communication channel 104, and a decoder 106.

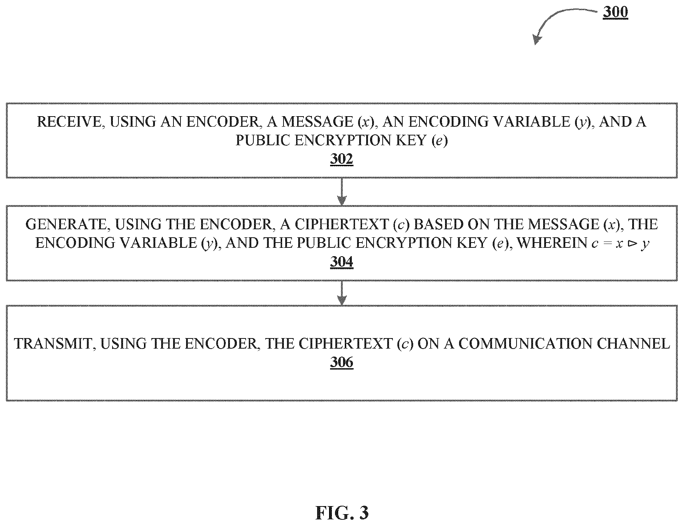

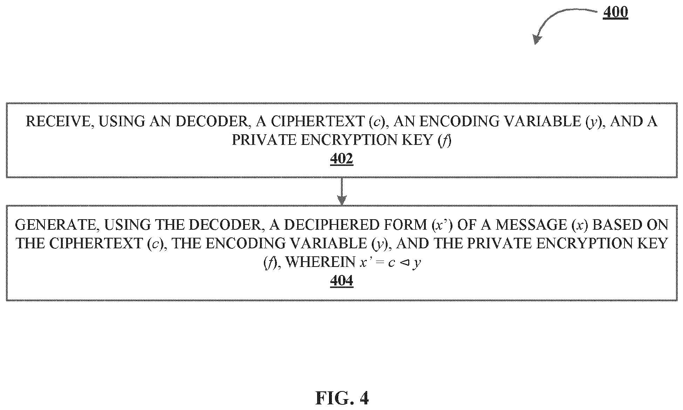

The encoder 102 may be configured to transform med (e.g., message (x)) data into a secure, encrypted format (e.g., ciphertext (c)), using a predetermined algorithm to ensure the confidentiality, integrity, and authenticity of the data during transmission. In this regard, the encoder 102 may be configured to implement a quandle algebra-based encryption technique (described in further detail below in connection with FIGS. 3 and 4) as the basis for security.

The encoder 102 may be realized through various implementation modalities, including but not limited to software applications executed on general-purpose computing devices, which afford significant flexibility and ease of updates through the utilization of central processing unit (CPU) capabilities to execute encryption algorithms. Alternatively or additionally, in some environments, such as environments necessitating high-speed data transmission, the encoder 102 may be embodied in dedicated hardware forms, such as Application-Specific Integrated Circuits (ASICs) or Field-Programmable Gate Arrays (FPGAs). Alternatively or additionally, the encoder 102 may be implemented in a hybrid implementation that combines software flexibility with hardware acceleration. Alternatively or additionally, the encoder 102 may be provisioned as a cloud-based service, embodying encryption as a service (EaaS) to offer scalability and accessibility. Alternatively or additionally, and specifically in contexts where computing resources are limited, the encoder 102 may be integrated into the firmware of embedded systems, providing encryption capabilities directly within devices such as Internet of Things (IoT) devices or mobile phones.

The communication channel 104 may serve as the medium over which the encrypted data (e.g., ciphertext (c)) is transmitted from the encoder to the decoder. The communication channel 104 may be characterized by its functional capacity to facilitate secure data transfer rather than by the specific nature or technology of the transmission medium employed. As such, while the communication channel 104 may employ various forms of digital transmission mediums - including, but not limited to, wired networks, wireless networks (e.g., radio frequency communication), optical transmission networks (e.g., optical transmission media), and satellite communication networks-this disclosure is not limited to these examples. The term 'digital transmission medium' as used herein is intended to encompass any technology or method capable of carrying digital information between two points, irrespective of the physical form or technological implementation of said technology or method. Furthermore, the communication channel 104 is presumed to operate in environments where the security of the channel itself cannot be inherently guaranteed, acknowledging the potential presence of eavesdroppers or malicious entities. Thus, the integrity and confidentiality of the data transmitted over this channel are maintained solely through the use of the encryption techniques discussed herein.

The decoder 106 may be configured to transform encrypted data (e.g., ciphertext (c)) back into its original form (e.g., message (x)) using a predetermined algorithm to ensure the secure and accurate reconstruction of the data. **In** this regard, the decoder 106 may be configured to implement a quandle algebra-based decryption technique (described in further detail below in connection with FIGS. 3 and 4), corresponding to the encryption technique used by the encoder 102, to ensure compatibility and maintain the confidentiality, integrity, and authenticity of the data during its reconstitution. Similar to the encoder 102, the decoder 104 may be implemented in various forms, including a software solution on computing devices, dedicated hardware optimized for decryption, a hybrid model that leverages the strengths of both software and hardware, as a cloud-based decryption service, within embedded systems, matching the encoder's flexibility and adaptability, and/or the like.

It is to be understood that the descriptions provided herein for the implementation forms of the encoder 102 and decoder 102 are illustrative rather than exhaustive. The scope of the invention encompasses all possible variations, modifications, and configurations of these components that adhere to the underlying principles of the secure communication system, including future advancements in technology that may introduce new forms of implementation.

Furthermore, it is to be understood that the structure of the system environment 100 and its components, connections and relationships, and their functions, are meant to be exemplary only, and are not meant to limit implementations of the disclosures described and/or claimed in this document. In one example, the system environment 100 may include more, fewer, or different components. In another example, some or all of the portions of the system environment 100 may be combined into a single portion or all of the portions of the environment 100 may be separated into two or more distinct portions.

Example Device Circuitry

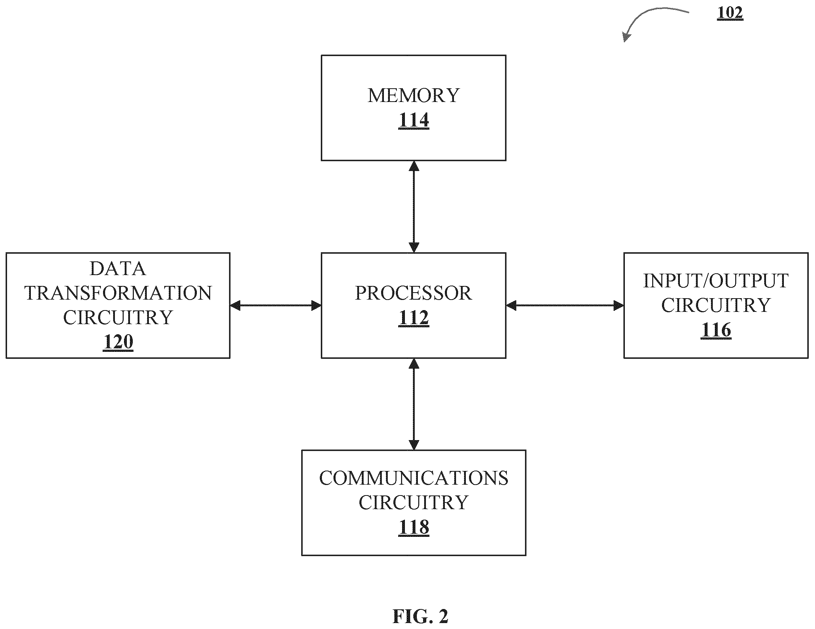

FIG. 2 illustrates a schematic block diagram of example device circuitry, in accordance with an embodiment of the present invention. As described herein, the encoder 102 and the decoder 104 may embody the same or substantially similar structural configurations. Therefore, while the ensuing description focuses on the device circuitry of the encoder 102, it is to be understood that the decoder 104 may possess an analogous or essentially equivalent device circuitry. This parallelism in structure and function between the two devices 102. 104 implies that descriptions, illustrations, and technical details pertaining to the device circuitry of the encoder 102 are equally applicable and representative of the decoder 104, unless otherwise specified.

As shown in FIG. 2, the encoder 102 may include a processor 112, a memory 114, input/output circuitry 116, communications circuitry 118, and a data transformation circuitry 120.

Although the term "circuitry" as used herein with respect to components 112-120 is described in some cases using functional language, it should be understood that the particular implementations necessarily include the use of particular hardware configured to perform the functions associated with the respective circuitry as described herein. It should also be understood that certain of these components 112-120 may include similar or common hardware. For example, two sets of circuitries may both leverage use of the same processor, network interface, storage medium, or the like to perform their associated functions, such that duplicate hardware is not required for each set of circuitries. It will be understood in this regard that some of the components described in connection with the encoder 102 may be housed together, while other components are housed separately (e.g., a controller in communication with the encoder 102). While the term "circuitry" should be understood broadly to include hardware, in some embodiments, the term "circuitry" may also include software for configuring the hardware. For example, in some embodiments, "circuitry" may include processing circuitry, storage media, network interfaces, input/output devices, and the like. In some embodiments, other elements of the encoder 102 may provide or supplement the functionality of particular circuitry. For example, the processor 112 may provide processing functionality, the memory 114 may provide storage functionality, the communications circuitry 118 may provide network interface functionality, and the like.

In some embodiments, the processor 112 (and/or co-processor or any other processing circuitry assisting or otherwise associated with the processor) may be in communication with the memory 114 via a bus for passing information among components of, for example, the encoder 102. The memory 114 may be non-transitory and may include, for example, one or more volatile and/or non-volatile memories, or some combination thereof. In other words, for example, the memory 114 may be an electronic storage device (e.g., a non-transitory computer readable storage medium). The memory 114 may be configured to store information, data, content, applications, instructions, or the like, for enabling an apparatus, e.g., the encoder 102, to carry out various functions in accordance with example embodiments of the present disclosure.

Although illustrated in FIG. 2 as a single memory, the memory 114 may comprise a plurality of memory components. The plurality of memory components may be embodied on a single computing device or distributed across a plurality of computing devices. In various embodiments, the memory 114 may comprise, for example, a hard disk, random access memory, cache memory, flash memory, a compact disc read only memory (CD-ROM), digital versatile disc read only memory (DVD-ROM), an optical disc, circuitry configured to store information, or some combination thereof. The memory 114 may be configured to store information, data, applications, instructions, or the like for enabling the encoder 102 to carry out various functions in accordance with example embodiments discussed herein. For example, in at least some embodiments, the memory 114 may be configured to buffer data for processing by the processor 112. Additionally, or alternatively, in at least some embodiments, the memory 114 may be configured to store program instructions for execution by the processor 112. The memory 114 may store information in the form of static and/or dynamic information. This stored information may be stored and/or used by the encoder 102 during the course of performing its functionalities.

The processor 112 may be embodied in a number of different ways and may, for example, include one or more processing devices configured to perform independently. Additionally, or alternatively, the processor 112 may include one or more processors configured in tandem via a bus to enable independent execution of instructions, pipelining, and/or multithreading. The processor 112 may, for example, be embodied as various means including one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits such as, for example, an ASIC (application specific integrated circuit) or FPGA (field programmable gate array), or some combination thereof. The use of the term "processing circuitry" may be understood to include a single core processor, a multi-core processor, multiple processors internal to the apparatus, and/or remote or "cloud" processors. Accordingly, although illustrated in FIG. 2 as a single processor, in some embodiments, the processor 112 may include a plurality of processors. The plurality of processors may be embodied on a single computing device or may be distributed across a plurality of such devices collectively configured to function as the encoder 102. The plurality of processors may be in operative communication with each other and may be collectively configured to perform one or more functionalities of the encoder 102 as described herein.

In an example embodiment, the processor 112 may be configured to execute instructions stored in the memory 114 or otherwise accessible to the processor 112. Alternatively, or additionally, the processor 112 may be configured to execute hard-coded functionality. As such, whether configured by hardware or software methods, or by a combination thereof, the processor 112 may represent an entity (e.g., physically embodied in circuitry) capable of performing operations according to an embodiment of the present disclosure while configured accordingly. Alternatively, as another example, when the processor 112 is embodied as an executor of software instructions, the instructions may specifically configure the processor 112 to perform one or more algorithms and/or operations described herein when the instructions are executed. For example, these instructions, when executed by the processor 112, may cause the encoder 102 to perform one or more of the functionalities thereof as described herein.

In some embodiments, the encoder 102 may further include input/output circuitry 116 that may, in turn, be in communication with the processor 112 to provide an audible, visual, mechanical, or other output and/or, in some embodiments, to receive an indication of an input (e.g., the message (x)) from a user or another source. In that sense, the input/output circuitry 116 may include means for performing analog-to-digital and/or digital-to-analog data conversions. The input/output circuitry 116 may include support, for example, for a display, touchscreen, keyboard, mouse, image capturing device (e.g., a camera), microphone, and/or other input/output mechanisms. The input/output circuitry 116 may include a user interface and may include a web user interface, a mobile application, a kiosk, or the like.

The processor 112 and/or user interface circuitry comprising the processor 112 may be configured to control one or more functions of a display or one or more user interface elements through computer-program instructions (e.g., software and/or firmware) stored on a memory accessible to the processor 112 (e.g., the memory 114, and/or the like). In some embodiments, aspects of input/output circuitry 116 may be reduced as compared to embodiments where the encoder 102 may be implemented as an end-user machine or other type of device designed for complex user interactions. In some embodiments (like other components discussed herein), the input/output circuitry 116 may be eliminated from the encoder 102. The input/output circuitry 116 may be in communication with memory 114, communications circuitry 118, and/or any other component(s), such as via a bus. Although more than one input/output circuitry and/or other component can be included in the encoder 102, only one is shown in FIG. 2 to avoid overcomplicating the disclosure (e.g., as with the other components discussed herein).

The communications circuitry 118, in some embodiments, includes any means, such as a device or circuitry embodied in either hardware, software, firmware or a combination of hardware, software, and/or firmware, that is configured to receive and/or transmit data from/to a network and/or any other device, circuitry, or module associated therewith. In this regard, the communications circuitry 118 may include, for example, a network interface for enabling communications with a wired or wireless communication network (e.g., communication channel 104). For example, in some embodiments, communications circuitry 118 may be configured to receive and/or transmit any data that may be stored by the memory 114 using any protocol that may be used for communications between computing devices. For example, the communications circuitry 118 may include one or more communication ports, network interface cards, antennae, transmitters, receivers, buses, switches, routers, modems, and supporting hardware and/or software, and/or firmware/software, or any other device suitable for enabling communications via a network. Additionally, or alternatively, in some embodiments, the communications circuitry 118 may include circuitry for interacting with the antenna(s) to cause transmission of signals via the antenna(e) or to handle receipt of signals received via the antenna(e). These signals may be transmitted by the encoder 102 using any of a number of wireless personal area network (PAN) technologies, such as Bluetooth® v1.0 through v5.0, Bluetooth Low Energy (BLE), infrared wireless (e.g., IrDA), ultra-wideband (UWB), induction wireless transmission, or the like. In addition, it should be understood that these signals may be transmitted using Wi-Fi, Near Field Communications (NFC), Worldwide Interoperability for Microwave Access (WiMAX) or other proximity-based communications protocols. The communications circuitry 118 may additionally or alternatively be in communication with the memory 114, the input/output circuitry 116, and/or any other component of the encoder 102, such as via a bus. The communication circuitry 118 of the encoder 102 may also be configured to receive and transmit information to and from the various components associated therewith.

As part of the encoder 102, in some embodiments, the data transformation circuitry 120 may be configured to execute the data transformation logic (e.g.,

$$c = x \triangleright y = y \left(\frac{x}{y}\right)^e$$

) to transmute the data from its initial state, (e.g., message ($x$)), into an encrypted format, (e.g., ciphertext ($c$)). As described herein, the transformation may employ a public-key cryptographic system that leverages the computational difficulty of factoring large numbers within the context of a quandle and/or rack algebra-based encryption framework. The quandle and/or rack algebra-based encryption algorithm operationalized by the data transformation circuitry 120 may involve: the generation of a pair of keys (a public key ($e$) for encryption and a private key ($f$) for decryption) by an intended recipient (e.g., decoder 106, shown in FIG. 1), the encryption of the message ($x$) using the public key ($e$), and the production of ciphertext ($c$) that can only be decrypted by the corresponding private key ($f$). As such, the data transformation circuitry 120 may facilitate the encoding process through modular exponentiation, as described herein with respect to FIG. 3.

As applied to the decoder 106 shown in FIG. 1 (for example, when the decoder is configured similarly to the encoder 102 as depicted in FIG. 2), in some embodiments, the data transformation circuitry 120 may be configured to implement the inverse data transformation logic (e.g.,

$$x' = c \triangleleft y = y \left(\frac{c}{y}\right)^f$$

), deciphering the encrypted data (e.g., ciphertext ($c$)) into a deciphered form ($x'$) of the original message (e.g., message ($x$)). This decryption process is based on the utilization of the private key ($f$), which is uniquely associated with the public key ($e$) used for encryption. The data transformation circuitry 120 may decode the ciphertext ($c$) through inverse modular exponentiation, as described herein with respect to FIG. 4.

In some embodiments, the encoder 102 may include hardware, software, firmware, and/or a combination of such components, configured to support various aspects of encryption as described herein. It should be appreciated that in some embodiments, the data transformation circuitry 120 may perform one or more of such example actions in combination with another circuitry of the encoder 102, such as the memory 114, processor 112, input/output circuitry 116, and/or communications circuitry 118. For example, in some embodiments, the data transformation circuitry 120 may utilize the processing circuitry, such as the processor 112 and/or the like, to form a self-contained subsystem to perform one or more of its corresponding operations. In a further example, and in some embodiments, some or all of the functionality of the data transformation circuitry 120 may be performed by the processor 112. In this regard, some or all of the example processes and algorithms discussed herein can be performed by at least one processor 112 and/or the data transformation circuitry 120. It should also be appreciated that, in some embodiments, the data transformation circuitry 120 may include a separate processor, specially configured field programmable gate array (FPGA), or application specific interface circuit (ASIC) to perform its corresponding functions.

Additionally, or alternatively, in some embodiments, the data transformation circuitry 120 may use the memory 114 to store collected information. For example, in the encoder 102, in some implementations, the data transformation circuitry 120 may include hardware, software, firmware, and/or a combination thereof, that interacts with the memory 114 to store the message ($x$)) that is to be encrypted, temporarily hold the data during the encryption process, cache frequently accessed data to expedite encryption process, and/or log encryption parameters and metadata. In the decoder 106, in some implementations, the data transformation circuitry 120 may include hardware, software, firmware, and/or a combination thereof, that interacts with the memory 114 to store encrypted data (e.g., ciphertext ($c$)) upon receipt and before decryption, buffer the ciphertext during the decryption process, cache key decryption parameters and frequently accessed data, and log decryption activities such as key usage and metadata.

Accordingly, non-transitory computer readable storage media, which may, for example, be the memory 114, can be configured to store firmware, one or more application programs, and/or other software, which include instructions and/or other computer-readable program code portions that can be executed to direct operation of the encoder 102 to implement various operations, including the examples described herein. As such, a series of computer-readable program code portions may be embodied in one or more computer-program products and can be used, with a device, encoder 102, database, and/or other programmable apparatus, to produce the machine-implemented processes discussed herein. It is also noted that all or some of the information discussed herein can be based on data that is received, generated and/or maintained by one or more components of the encoder 102. In some embodiments, one or more external systems (such as a remote cloud computing and/or data storage system) may also be leveraged to provide at least some of the functionality discussed herein.

It should be recognized that the structure of the encoder 102, as detailed herein, represents merely one embodiment among a multitude of potential configurations. This particular structure of the encoder 102, as described herein, demonstrates a specific arrangement and interaction of its components-encompassing data processing units, network interfaces, and data transformation circuitry-that collectively contribute to its comprehensive network capabilities. However, this outlined configuration is not definitive or limiting. The structure of the encoder 102 and its integral components can be varied to adapt to different networking paradigms, technological evolutions, and specific application needs. Thus, while the present disclosure depicts one potential structure for the encoder 102, it is to be understood that this represents just one exemplification within the broader realm of network-enabled devices. The scope of the invention is, therefore, not confined to this singular form but is extendable to various other forms, technologies, and configurations.

Example Method for Data Encryption

FIG. 3 illustrates an example method 300 for encrypting the data, in accordance with an embodiment of the invention. As shown in block 302, an encoder (such as the encoder 102 shown in FIG. 1 and configured as shown and described above in connection with FIG. 2) may receive a message $(x)$, an encoding variable $(y)$, and a public encryption key $(e)$.

The message $(x)$ may refer to the original, unencrypted data or plaintext that is to be encrypted by the encryption algorithm. The nature of the message $(x)$ can vary widely depending on its intended use and the context in which it is being communicated. For example, the message $(x)$ may be textual data, such as messages, emails, documents, and/or the like; numerical data, such as financial information, scientific data, and/or the like; and/or multimedia data, such as images, audio, and video files, and/or the like. Similarly, the structure of the message $(x)$ may also depend on its intended use and context. For example, the message $(x)$ may be linear text, where the data is a sequence of characters or numbers, often with a defined beginning and an end; structured data, where the data adheres to a specific format or schema, such as JavaScript Object Notation (JSON), Extensible Markup Language (XML), or Comma Separated Values (CSV) files, where the arrangement of the data conveys meaning; or unstructured data, where the information does not have a pre-defined data model.

Due to the diverse nature of the message $(x)$, prior to being encrypted, the message $(x)$ may be transformed into a uniform format that the encryption algorithm can efficiently process, ensuring that the intrinsic characteristics of the original data-regardless of its type and/or structure-are preserved and translated into a numerical or binary format. Such a transformation may be governed by specific encoding standards, which dictate how different types of data are represented numerically. For example, the message $(x)$ may be transformed using American Standard Code for Information Interchange (ASCII), Unicode, binary encoding, hexadecimal encoding, and/or the like. By standardizing the representation of various data types, the transformation ensures that encryption algorithms can apply their mathematical transformations uniformly, regardless of the original data's nature. As such, regardless of the initial form of the message $(x)$, the message $(x)$ can be transformed into either an integer format, non-integer format, rational numbers, and/or the like to comply with the operational requirements of the cryptographic algorithm described herein. **In** an example embodiment, the message $(x)$ may satisfy the condition $0 \leq x \leq n - 1$, where $n$ is a composite number of the form, $n = p \cdot q$, and p and $q$ are prime numbers. The choice of $n$ as a product of two prime numbers (often large prime numbers) underpins the security of the encryption algorithm. The difficulty of factoring $n$ back into its prime components without prior knowledge of $p$ and $q$ makes it computationally difficult for unauthorized parties to decrypt the message $(x)$ without access to the private key $(f)$.

The public encryption key $(e)$ may refer to a portion of the public-private encryption key pair that may be shared openly without compromising the security of the cryptographic system. **In** an example embodiment, the public encryption key $(e)$ may be generated by an intended recipient (e.g., a decoder, such as the decoder 106 shown in FIG. 1) and communicated to the transmitting party (e.g., the encoder), as described in further detail with respect to FIG. 4. As such, the public encryption key $(e)$ may be used by anyone to encrypt the data (e.g., message $(x)$). Alternatively or additionally, the public encryption key $(e)$ may be generated by the encoder and transmitted to the decoder along with the ciphertext $(c)$ for digital signature verification purposes. The public encryption key $(e)$ may be a large prime number or have a large prime factor. For example, the public encryption key ($e$) may satisfy the condition $1 < e < \phi(n)$, where $\phi(n)$ is Euler's totient function. Here, $\phi(n) = \phi(p \cdot q) = (p - 1) \cdot (q - 1)$. Furthermore, e may be coprime to $\phi(n)$, ensuring that $e$ has an inverse modulo $\phi(n)$, a necessary condition for the corresponding private key ($f$) to exist, where $f$ is the number that satisfies the equation $e \cdot f = 1\ mod\ \phi(n)$. **In** other words, $f$ is chosen such that the product of $f$ and $e$, when divided by $\phi(n)$, leaves a remainder of 1. Alternatively or additionally, the public encryption key ($e$) may satisfy the condition $1 < e < \lambda(n)$, where $\lambda(n)$ is a Carmichael's totient function. Here, $\lambda(n) = \lambda(p \cdot q) = lcm(p - 1, q - 1)$, where lcm is least common multiple. Similarly, e may be coprime to $\lambda(n)$, ensuring that e has an inverse modulo $\lambda(n)$, a necessary condition for the corresponding private key ($f$) to exist, where $f$ is the number that satisfies the equation $e \cdot f = 1\ mod\ \lambda(n)$.

The encoding variable ($y$) may be a parameter used in the encryption process to modify the message prior to or during the encryption operation. In example embodiments, similar to the public encryption key ($e$), the encoding variable ($y$) may also be generated by an intended recipient (e.g., the decoder) and communicated to the transmitter (e.g., the encoder), as described in further detail with respect to FIG. 4. Alternatively, or additionally, the encoding variable ($y$) may be generated by the encoder and transmitted to the decoder along with the public encryption key ($e$) and ciphertext ($c$) for digital signature verification purposes. Alternatively or additionally, the encoding variable ($y$) may not be publicly communicated between the parties (e.g., the encoder and the decoder) and may instead be communicated via a secure key distribution protocol, such as quantum key distribution (QKD). The encoding variable ($y$) may be a constant, a randomly generated number, a value derived from some aspect of the encryption scheme, and/or the like. The encoding variable ($y$) may add a layer of complexity to the encryption process, making the resulting ciphertext ($c$) more secure. As such, in the encryption algorithm described herein, the encoding variable ($y$) may be a rational number that is not equal to 1.

As shown in block 304, the encoder may generate a ciphertext ($c$) based on the message ($x$), the encoding variable ($y$), and the public encryption key ($e$), wherein $c = x \triangleright y$. Here, $\triangleright$ is a binary operation that satisfies the axioms of quandle and/or rack, and $x \triangleright y = y\left(\dfrac{x}{y}\right)^{e}$. This operation transforms the message ($x$) into ciphertext ($c$), ensuring that the message is encrypted in a manner that can only be decrypted by the intended recipient possessing the corresponding private key ($f$).

In some embodiments, in addition to the use of an encoding variable ($y$), the encoder may be configured to add an extra layer of complexity by introducing a second encoding variable ($z$) to the encryption process, making the resulting ciphertext ($c$) more secure. Here, the second encoding variable ($z$) may be generated and communicated between the parties similar to the encoding variable ($y$). As such, the second encoding variable ($z$) may be a constant, a randomly generated number, a value derived from some aspect of the encryption scheme, and/or the like. In this regard, the encoder may be configured to generate the ciphertext ($c$) based on the message ($x$), the encoding variable ($y$), the second encoding variable ($z$), and the public encryption key ($e$), wherein $c = x \triangleright y \triangleright z$. In example embodiments, the encoder may be configured to generate a temporary value ($t$), by generating a value for $x \triangleright y$ using the relationship, $t = x \triangleright y = y\left(\dfrac{x}{y}\right)^{e}$. Subsequently, the encoder may be configured to generate the ciphertext by calculating a value for $t' \triangleright z$ using the relationship, $c = t \triangleright z = z\left(\dfrac{t}{z}\right)^{e}$. In the encryption algorithm described herein, the second encoding variable ($z$) may also be a rational number.

In example embodiments, in addition to introducing the encoding variables (e.g., the encoding variable ($y$) and the second encoding variable ($z$)), the complexity of the encryption can be further strengthened by using a unique public key - private key pair ($e$-$f$ pair) for each encoding variable introduced. As such, the encoder may be configured to generate the ciphertext ($c$) based on the message ($x$), the encoding variable ($y$), the second encoding variable ($z$), a first public encryption key ($e1$), and a second public encryption key ($e2$), wherein $c = x \triangleright y \triangleright z$. In example embodiments, the encoder may be configured to generate a temporary value ($t$), by generating a value for $x \triangleright y$ using the relationship, $t = x \triangleright y = y\left(\dfrac{x}{y}\right)^{e1}$. Subsequently, the encoder may be configured to generate the ciphertext by calculating a value for $t' \triangleright z$ using the relationship, $c = t \triangleright z = z\left(\dfrac{t}{z}\right)^{e2}$. Here, $e1$ and $e2$ may be coprime to $\phi(n)$, ensuring that $e1$ has an inverse modulo $\phi(n)$, a necessary condition for the corresponding private key ($f1$) to exist, and $e2$ has an inverse modulo $\phi(n)$, a necessary condition for the corresponding private key ($f2$) to exist, where $f1$ is the number that satisfies the equation $e1 \cdot f1 = 1\ mod\ \phi(n)$ and $f2$ is the number that satisfies the equation $e2 \cdot f2 = 1\ mod\ \phi(n)$.

As shown in block 306, the encoder may transmit the ciphertext ($c$) on a communication channel (e.g., the communication channel 104 in FIG. 1). Once generated, the ciphertext ($c$) may be transmitted via the communication channel to an intended recipient. In embodiments where the encoding variable ($y$) is generated by the encoder (e.g., for digital signature verification purposes), the encoding variable ($y$) is transmitted along with the ciphertext ($c$) on the communication channel. As described herein, the communication channel may serve as the medium over which the encrypted data is transmitted from the encoder to the particular recipient (e.g., a decoder). Upon receiving the ciphertext ($c$), and, in an example embodiment, the encoding variable ($y$), the decoder may be configured to generate a deciphered form ($x'$) of the message ($x$) based on the ciphertext ($c$), the encoding variable ($y$), and a private encryption key ($f$), as described in further detail with respect to FIG. 4.

Example Method for Data Decryption

FIG. 4 illustrates an example method 400 for decrypting an encrypted message, in accordance with an embodiment of the invention. As shown in block 402, a decoder (such as a decoder 106 shown in FIG. 1 and configured as shown and described above in connection with FIG. 2) may receive a ciphertext ($c$), an encoding variable ($y$), and a private encryption key ($f$).

The private encryption key ($f$) may refer to a component of the key pair used for decryption. As described herein, the encryption algorithm may be an asymmetric cryptographic system that employs a pair of keys: a public encryption key ($e$) for encryption and a private encryption key ($f$) for decryption. In an example embodiment, an intended recipient (e.g., decoder) may generate the public-private key pair that is to be used in the encryption-decryption process. To generate the private encryption key ($f$), any intended recipient (e.g., a decoder) may select two distinct (typically) large prime numbers, $p$ and $q$. The size of the prime numbers chosen may inform the security of the encryption algorithm. Once $p$ and $q$ are chosen, the decoder may be configured to determine the modulus $n$ by multiplying $p$ and $q$. This modulus is used in both the public encryption key ($e$) and the private encryption key ($f$). Subsequently, the decoder may be configured to determine an Euler's Totient function, $\phi(n) = \varphi(p \cdot q) = (p-1) \cdot (q-1)$, which represents the count of numbers less than $n$ that are coprime to $n$. Then the decoder may choose a public encryption key ($e$) such that $1 < e < \phi(n)$, and $e$ is coprime to $\phi(n)$. For example, e may be a small prime number, such as 65537, to make encryption efficient. Subsequently, the decoder may be configured to calculate the private encryption key ($f$) as the modulo multiplicative inverse of $e$ modulo $\phi(n)$, satisfying the equation, $e \cdot f = 1$ $mod \, \phi(n)$, meaning that $f$ is a number that, when multiplied by $e \, \phi(n)$, yields 1. Upon generating the public-private key pair, the decoder may be configured to communicate the public key ($e$) to the encoder. Similarly, the decoder may also generate the encoding variable ($y$). In this regard, the decoder may generate the encoding variable ($y$) as a constant, a randomly generated number, a value derived from some aspect of the encryption scheme, and/or the like, and may transmit the encoding variable ($y$) to the encoder.

As shown in block 402, the decoder may generate a deciphered form ($x'$) of a message ($x$) based on the ciphertext ($c$), the encoding variable ($y$), and the private encryption key ($f$), wherein $x' = c \lhd y$. Here, $\lhd$ is a binary operation that

$$c \lhd y = y \left( \frac{c}{y} \right)^f$$

satisfies the axioms of quandle and/or rack, and . This operation transforms the ciphertext ($c$) into a deciphered form ($x'$) of the message ($x$).

In embodiments where the message ($x$) was encrypted using both the encoding variable ($y$) and the second encoding variable ($z$), the decoder may be configured to generate the deciphered form ($x'$) of the message ($x$) by first generating a deciphered form ($t'$) of the temporary value ($t$) by generating a value for $c \lhd z$ using the relationship,

$$t' = c \lhd z = z \left( \frac{c}{z} \right)^f$$

. Subsequently, the decoder may be configured to generate the deciphered form ($x'$) of the

$$x' = t' \lhd y = y \left( \frac{t'}{y} \right)^f$$

message ($x$) by calculating a value for . As described herein, the second encoding variable ($z$) may be generated by the decoder as a constant, a randomly generated number, a value derived from some aspect of the encryption scheme, and/or the like, and transmitted to the encoder.

In embodiments where the message ($x$) was encrypted using the first public encryption key ($e1$) and the second public encryption key ($e2$), the decoder may be configured to generate the deciphered form ($x'$) of the message ($x$) by first generating a deciphered form (t') of the temporary value ($t$) by generating a value for $c \lhd z$ using the relationship,

$$t' = c \lhd z = z \left( \frac{c}{z} \right)^{f1}$$

, wherein $f1$ is the first private encryption key that is part of the public-private key pair ($e1$-$f1$). Subsequently, the decoder may be configured to generate the deciphered form ($x'$) of the message ($x$) by calculating a

$$x' = t' \lhd y = y \left( \frac{t'}{y} \right)^{f2}$$

value for , wherein $f2$ is the second private encryption key that is part of the public-private key pair ($e2$-$f2$).

In the context of the present invention's encryption framework, the introduction of encoding variables $y$ and $z$ serves as an illustrative embodiment, demonstrating the method by which message can be pre-processed prior to encryption. It should be understood, however, that the use of encoding variables $y$ and $z$ is merely exemplary and not intended to limit the invention's scope or applicability. The encryption framework, as conceived, is capable of accommodating a multiplicity of encoding variables (e.g., $z_1$, $z_2$, ..., $z_k$), beyond the specifically disclosed $y$ and $z$.

As such, the proposed encryption framework may be configured to exhibit a level of complexity that, at the very least, is equivalent to that of the RSA encryption algorithm. The proposed encryption framework's complexity, however, is not limited to a single iteration of RSA-level complexity, but may, at the very least, extend to multiple applications of the RSA scheme. This formulation implies that the encryption framework's complexity can be understood as augmented, involving one or more iterations of RSA-level complexity, where each layer or iteration adds an additional level of RSA complexity. The implication of such a design is that the encryption strength and security could be significantly enhanced by increasing the value of $m$ (e.g., by introducing an encoding variable, multiple public-private key pairs, and/or the like, as described herein). Each additional power of RSA compounds the complexity, theoretically making the framework more resistant to decryption efforts without the appropriate key or decryption algorithm. Moreover, the topological aspects of a complex braid can be utilized, making the decryption process even harder, e.g., by utilizing the computational complexity of unknotting.

Many modifications and other embodiments of the present disclosure set forth herein will come to mind to one skilled in the art to which these embodiments pertain having the benefit of the teachings presented in the foregoing descriptions and the associated drawings. Although the figures only show certain components of the methods and systems described herein, it is understood that various other components may also be part of the disclosures herein. In addition, the method described above may include fewer steps in some cases, while in other cases the method may include additional steps. The steps and modifications to the steps of the method described above, in some cases, may be performed in any order and in any combination.

Therefore, it is to be understood that the present disclosure is not to be limited to the specific embodiments disclosed and that modifications and other embodiments are intended to be included within the scope of the appended claims. Although specific terms are employed herein, they are used in a generic and descriptive sense only and not for purposes of limitation.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

The disclosure of this application also includes the following numbered clauses:

Clause 1. A system for implementing secure communication, the system comprising:

an encoder, wherein the encoder is configured to:

receive a message ($x$), an encoding variable ($y$), and a public encryption key ($e$);
generate a ciphertext ($c$) based on the message ($x$), the encoding variable ($y$), and the public encryption key ($e$), wherein $c = x \triangleright y$; and
transmit the ciphertext ($c$) on a communication channel, wherein the communication channel is operatively coupled to the encoder; and

a decoder operatively coupled to the communication channel, wherein the decoder is configured to:

receive the ciphertext ($c$), the encoding variable ($y$), and a private encryption key ($f$); and
generate a deciphered form ($x'$) of the message ($x$) based on the ciphertext ($c$), the encoding variable ($y$), and the private encryption key ($f$), wherein $x' = c \triangleleft y$, and wherein $\triangleright$ and $\triangleleft$ are binary operations that satisfy axioms of a quandle.

Clause 2. The system of Clause 1, wherein $x$ and $y$ are rational numbers, and wherein $y$ is not equal to 1.

Clause 3. The system of Clause 1, wherein $x$ is a non-integer.

Clause 4. The system of Clause 1, wherein $0 \leq x \leq n - 1$, wherein $n$ is a composite number of the form, $n = p \cdot q$, and wherein $p$ and $q$ are prime numbers.

Clause 5. The system of Clause 4, wherein $x \triangleright y = y\left(\frac{x}{y}\right)^e$ , wherein $1 < e < \phi(n)$, wherein $\phi(n)$ is Euler's totient function, and wherein $\phi(n) = \phi(p \cdot q) = (p - 1) \cdot (q - 1)$.

Clause 6. The system of Clause 5, wherein $1 < e < \lambda(n)$, wherein $\lambda(n)$ is Carmichael's totient function, and wherein $\lambda(n) = \lambda(p \cdot q) = lcm(p - 1, q - 1)$, wherein lcm is least common multiple.

Clause 7. The system of Clause 5, wherein e is coprime to $\phi(n)$.

Clause 8. The system of Clause 5, wherein $c \triangleleft y = y\left(\frac{c}{y}\right)^f$ , and wherein $e \cdot f = 1 \ mod \ \phi(n)$.

Clause 9. The system of Clause 5, wherein the encoder is further configured to:

receive a second encoding variable ($z$); and
generate the ciphertext ($c$) based on the message ($x$), the encoding variable ($y$), the second encoding variable ($z$), and the public encryption key ($e$), wherein $c = x \triangleright y \triangleright z$,
wherein

$$x \triangleright y = y\left(\frac{x}{y}\right)^e, \text{ and } c = (x \triangleright y) \triangleright z = z\left(\frac{y\left(\frac{x}{y}\right)^e}{z}\right)^e .$$

Clause 10. The system of Clause 9, wherein the decoder is further configured to:

receive the ciphertext ($c$), the encoding variable ($y$), and the second encoding variable ($z$); and
generate the deciphered form ($x'$) of the message ($x$) based on the ciphertext ($c$), the encoding variable ($y$), the second encoding variable ($z$), and the private encryption key ($f$), wherein $x' = c \triangleleft y \triangleleft z$,
wherein

$$c \triangleleft z = z\left(\frac{c}{z}\right)^f, \text{ and } x' = (c \triangleleft z) \triangleleft y = y\left(\frac{z\left(\frac{c}{z}\right)^f}{y}\right)^f .$$

Clause 11. The system of Clause 9, wherein $z$ is a rational number.

Clause 12. The system of Clause 9, wherein the encoder is further configured to:
generate the ciphertext ($c$) based on the message ($x$), the encoding variable ($y$), the second encoding variable ($z$), a first public encryption key ($e1$), and a second public encryption key ($e2$), wherein $x \triangleright y = y\left(\frac{x}{y}\right)^{e1}$ , and

$$c = (x \triangleright y) \triangleright z = z\left(\frac{y\left(\frac{x}{y}\right)^{e1}}{z}\right)^{e2} .$$

Clause 13. The system of Clause 12, wherein decoder is further configured to:
generate the deciphered form ($x'$) of the message ($x$) based on the ciphertext ($c$), the encoding variable ($y$), the second encoding variable ($z$), and a first private encryption key ($f1$), and a second private encryption key ($f2$), wherein

$c \triangleleft z = z\left(\frac{c}{z}\right)^{f1}$ , and $x' = (c \triangleleft z) \triangleleft y = y\left(\frac{z\left(\frac{c}{z}\right)^{f1}}{y}\right)^{f2}$ , wherein $e1 \cdot f1 = 1 \ mod \ \phi(n)$, and $e2 \cdot f2 = 1 \ mod \ \phi(n)$.

Clause 14. A method for encoding a message, the method comprising:

receiving, using an encoder, a message ($x$), an encoding variable ($y$), and a public encryption key ($e$);

generating, using the encoder, a ciphertext ($c$) based on the message ($x$), the encoding variable ($y$), and the public encryption key ($e$), wherein $c = x \triangleright y$; and

transmitting, using the encoder, the ciphertext ($c$) to a communication channel,

wherein a decoder is configured to generate a deciphered form ($x'$) of the message ($x$) based on the ciphertext ($c$), the encoding variable ($y$), and a private encryption key ($f$), wherein $x' = c \triangleleft y$, and wherein $\triangleright$ and $\triangleleft$ are binary operations that satisfy axioms of a quandle.

Clause 15. The method of Clause 14, wherein $x$ and $y$ are rational numbers, and wherein $y$ is not equal to 1.

Clause 16. The method of Clause 14, wherein $x$ is a non-integer.

Clause 17. The method of Clause 14, wherein $0 \leq x \leq n - 1$, wherein $n$ is a composite number of the form, $n = p \cdot q$, and wherein $p$ and $q$ are prime numbers.

$$x \triangleright y = y \left(\frac{x}{y}\right)^e$$

Clause 18. The method of Clause 16, wherein , wherein $1 < e < \phi(n)$, wherein $\phi(n)$ is Euler's totient function, and wherein $\phi(n) = \phi(p \cdot q) = (p - 1) \cdot (q - 1)$.

Clause 19. The method of Clause 18, wherein $1 < e < \lambda(n)$, wherein $\lambda(n)$ is Carmichael's totient function, and wherein $\lambda(n) = \lambda(p \cdot q) = lcm(p - 1, q - 1)$, wherein lcm is least common multiple.

Clause 20. A method for decoding a message, the method comprising:

receiving, using a decoder, a ciphertext ($c$), an encoding variable ($y$), and a private encryption key ($f$); and

generating, via the decoder, a deciphered form ($x'$) of a message ($x$) based on the ciphertext ($c$), the encoding variable ($y$), and the private encryption key ($f$), wherein $x' = c \triangleleft y$,

wherein the ciphertext ($c$) is generated based on the message ($x$), the encoding variable ($y$), and a public encryption key ($e$), wherein $c = x \triangleright y$, and wherein $\triangleright$ and $\triangleleft$ are binary operations that satisfy axioms of a quandle.

Clause 21. The method of Clause 20, wherein $x$ and $y$ are rational numbers, and wherein y is not equal to 1.

Clause 22. The method of Clause 20, wherein $x$ is a non-integer.

$$c \triangleleft y = y \left(\frac{c}{y}\right)^f$$

Clause 23. The method of Clause 20, wherein , wherein $e \cdot f = 1 \; mod \; \phi(n)$.

## Claims

1. A system for implementing secure communication, the system comprising:

an encoder, wherein the encoder is configured to:

receive a message ($x$), an encoding variable ($y$), and a public encryption key ($e$);

generate a ciphertext ($c$) based on the message ($x$), the encoding variable ($y$), and the public encryption key ($e$), wherein $c = x \triangleright y$; and

transmit the ciphertext ($c$) on a communication channel, wherein the communication channel is operatively coupled to the encoder; and

a decoder operatively coupled to the communication channel, wherein the decoder is configured to:

receive the ciphertext ($c$), the encoding variable ($y$), and a private encryption key (f); and

generate a deciphered form ($x'$) of the message ($x$) based on the ciphertext ($c$), the encoding variable ($y$), and the private encryption key ($f$), wherein $x' = c \triangleleft$ y, and wherein $\triangleright$ and $\triangleleft$ are binary operations that satisfy axioms of a quandle.

2. The system of Claim 1, wherein $x$ and $y$ are rational numbers, and wherein y is not equal to 1.

3. The system of Claim 1 or 2, wherein $x$ is a non-integer.

4. The system of Claim 1, 2, or 3, wherein $0 \leq x \leq n - 1$, wherein $n$ is a composite number of the form, $n = p \cdot q$, and wherein $p$ and $q$ are prime numbers.

5. The system of Claim 4, wherein $$x \triangleright y = y \left(\frac{x}{y}\right)^e$$ , wherein $1 < e < \phi(n)$, wherein $\phi(n)$ is Euler's totient function, and wherein $\phi(n) = \phi(p \cdot q) = (p - 1) \cdot (q - 1)$.

6. The system of Claim 5, wherein $1 < e < \lambda(n)$, wherein $\lambda(n)$ is Carmichael's totient function, and wherein $\lambda(n) = \lambda(p \cdot q) = lcm(p - 1, q - 1)$, wherein lcm is least common multiple.

7. The system of Claim 5 or 6, wherein e is coprime to $\phi(n)$.

8. The system of Claim 5, 6, or 7, wherein $$c \triangleleft y = y \left(\frac{c}{y}\right)^f$$ , and wherein $e \cdot f = 1 \bmod \phi(n)$.

9. The system of any of Claims 5-8, wherein the encoder is further configured to:

   receive a second encoding variable ($z$); and
   generate the ciphertext ($c$) based on the message ($x$), the encoding variable ($y$), the second encoding variable ($z$), and the public encryption key ($e$), wherein $c = x \triangleright y \triangleright z$, wherein

$$x \triangleright y = y \left(\frac{x}{y}\right)^e, \text{ and } c = (x \triangleright y) \triangleright z = z \left(\frac{y\left(\frac{x}{y}\right)^e}{z}\right)^e .$$

10. The system of Claim 9, wherein the decoder is further configured to:

    receive the ciphertext ($c$), the encoding variable ($y$), and the second encoding variable ($z$); and
    generate the deciphered form ($x'$) of the message ($x$) based on the ciphertext ($c$), the encoding variable ($y$), the second encoding variable ($z$), and the private encryption key ($f$), wherein $x' = c \triangleleft y \triangleleft z$, wherein

$$c \triangleleft z = z \left(\frac{c}{z}\right)^f, \text{ and } x' = (c \triangleleft z) \triangleleft y = y \left(\frac{z\left(\frac{c}{z}\right)^f}{y}\right)^f .$$

11. The system of Claim 9 or 10, wherein $z$ is a rational number.

12. The system of Claim 9, 10, or 11, wherein the encoder is further configured to:
    generate the ciphertext ($c$) based on the message ($x$), the encoding variable ($y$), the second encoding variable ($z$), a first public encryption key ($e1$), and a second public encryption key ($e2$), wherein $$x \triangleright y = y \left(\frac{x}{y}\right)^{e1}$$ , and

$$c = (x \triangleright y) \triangleright z = z \left(\frac{y\left(\frac{x}{y}\right)^{e1}}{z}\right)^{e2} .$$

13. The system of Claim 12, wherein decoder is further configured to:

16

generate the deciphered form ($x'$) of the message ($x$) based on the ciphertext ($c$), the encoding variable ($y$), the second encoding variable ($z$), and a first private encryption key ($f1$), and a second private encryption key ($f2$), wherein

$$c \triangleleft z = z\left(\frac{c}{z}\right)^{f1}, \text{ and } x' = (c \triangleleft z) \triangleleft y = y\left(\frac{z\left(\frac{c}{z}\right)^{f1}}{y}\right)^{f2}, \text{ wherein } e1 \cdot f1 = 1 \bmod \phi(n), \text{ and } e2 \cdot f2 = 1 \bmod \phi(n).$$

14. A method for encoding a message, the method comprising:

 receiving, using an encoder, a message ($x$), an encoding variable ($y$), and a public encryption key ($e$);
 generating, using the encoder, a ciphertext ($c$) based on the message ($x$), the encoding variable ($y$), and the public encryption key ($e$), wherein $c = x \triangleright y$; and
 transmitting, using the encoder, the ciphertext ($c$) to a communication channel,
 wherein a decoder is configured to generate a deciphered form ($x'$) of the message ($x$) based on the ciphertext ($c$), the encoding variable ($y$), and a private encryption key ($f$), wherein $x' = c \triangleleft y$, and wherein $\triangleright$ and $\triangleleft$ are binary operations that satisfy axioms of a quandle.

15. A method for decoding a message, the method comprising:

 receiving, using a decoder, a ciphertext ($c$), an encoding variable ($y$), and a private encryption key ($f$); and
 generating, via the decoder, a deciphered form ($x'$) of a message ($x$) based on the ciphertext ($c$), the encoding variable ($y$), and the private encryption key ($f$), wherein $x' = c \triangleleft y$,
 wherein the ciphertext ($c$) is generated based on the message ($x$), the encoding variable ($y$), and a public encryption key ($e$), wherein $c = x \triangleright y$, and wherein $\triangleright$ and $\triangleleft$ are binary operations that satisfy axioms of a quandle.

**100**

COMMUNICATION CHANNEL **104**

$c$

$c$

$c$

$x$ ENCODER **102**

DECODER **106** $x$

**FIG. 1**

FIG. 2

<u>300</u>

RECEIVE, USING AN ENCODER, A MESSAGE ($x$), AN ENCODING VARIABLE ($y$), AND A PUBLIC ENCRYPTION KEY ($e$)
<u>302</u>

GENERATE, USING THE ENCODER, A CIPHERTEXT ($c$) BASED ON THE MESSAGE ($x$), THE ENCODING VARIABLE ($y$), AND THE PUBLIC ENCRYPTION KEY ($e$), WHEREIN $c = x \rhd y$
<u>304</u>

TRANSMIT, USING THE ENCODER, THE CIPHERTEXT ($c$) ON A COMMUNICATION CHANNEL
<u>306</u>

FIG. 3

_400_

RECEIVE, USING AN DECODER, A CIPHERTEXT ($c$), AN ENCODING VARIABLE ($y$), AND A PRIVATE ENCRYPTION KEY ($f$)
_402_

GENERATE, USING THE DECODER, A DECIPHERED FORM ($x$') OF A MESSAGE ($x$) BASED ON THE CIPHERTEXT ($c$), THE ENCODING VARIABLE ($y$), AND THE PRIVATE ENCRYPTION KEY ($f$), WHEREIN $x' = c \lhd y$
_404_

**FIG. 4**

Europäisches
Patentamt

European
Patent Office

Office européen
des brevets

## EUROPEAN SEARCH REPORT

**Application Number**

**EP 25 17 8135**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | ACASAMOSO DOMINADOR MONTANTE ET AL: "Blinded RSA: A Proposed Solution for Factorization and Side-Channel Attacks", PROCEEDINGS OF THE 2013 CONFERENCE ON COMPUTER SUPPORTED COOPERATIVE WORK, ACM, NEW YORK, NY, USA, 13 December 2024 (2024-12-13), pages 54-61, XP098126449, DOI: 10.1145/3718391.3718400 ISBN: 978-1-4503-1331-5 | 1-4,14, 15 | INV. H04L9/30 |
| A,P | * figures 1,2 * | 5-13 | |
| | ----- | | |
| X | US 2022/407719 A1 (HONORIO ARAUJO DA SILVA DAVID W [US] ET AL) 22 December 2022 (2022-12-22) | 1-4,14, 15 | |
| A | * pages 11,12; figure 2 * | 5-13 | |
| | ----- | | |

**TECHNICAL FIELDS SEARCHED (IPC)**

H04L

The present search report has been drawn up for all claims

| Place of search | Date of completion of the search | Examiner |
|---|---|---|
| Munich | 22 September 2025 | Billet, Olivier |

EPO FORM 1503 03.82 (P04C01)

## ANNEX TO THE EUROPEAN SEARCH REPORT
## ON EUROPEAN PATENT APPLICATION NO.

EP 25 17 8135

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2025

| Patent document cited in search report | Publication date | Patent family member(s) | Publication date |
|---|---|---|---|
| US 2022407719 A1 | 22-12-2022 | US 2022085973 A1 | 17-03-2022 |
| | | US 2022407719 A1 | 22-12-2022 |
| | | WO 2022061184 A2 | 24-03-2022 |
| | | WO 2022061188 A1 | 24-03-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IL 313045